# EUROPÄISCHE PATENTSCHRIFT

(11) **EP 0 958 020 B1**
(45) Veröffentlichungstag und Bekanntmachung des Hinweises auf die Patenterteilung: **14.11.2001**
(21) Anmeldenummer: 97940143.7
(22) Anmeldetag: 29.08.1997
(51) Int. Cl.: B01D 19/04, C11D 3/00

(54) **VERFAHREN ZUR HERSTELLUNG VON PARAFFINHALTIGEN SCHAUMREGULATOREN**
PROCESS FOR PRODUCING PARAFFIN-CONTAINING FOAM REGULATORS
PROCEDE POUR LA FABRICATION DE REGULATEURS DE MOUSSE CONTENANT DE LA PARAFFINE

(30) Priorität: 06.09.1996 DE 19636206
(43) Veröffentlichungstag der Anmeldung: 24.11.1999
(73) Patentinhaber: Henkel Kommanditgesellschaft auf Aktien, 40589 Düsseldorf-Holthausen (DE)
(72) Erfinder: ARTIGA GONZALEZ, Rene-Andres, D-40589 Düsseldorf (DE); LIPHARD, Maria, D-45279 Essen (DE); KRAUS, Ingrid, D-40229 Düsseldorf (DE); HAMMELSTEIN, Stefan, D-40591 Düsseldorf (DE)
(86) Internationale Anmeldenummer: EP9704714
(87) Internationale Veröffentlichungsnummer: WO9809701

(56) Entgegenhaltungen:
- EP-A- 0 094 250
- EP-A- 0 309 931
- EP-A- 0 723 795
- WO-A-92/20770
- WO-A-93/17772

## Beschreibung

Die vorliegende Erfindung betrifft ein Verfahren zur Herstellung eines schüttfähigen Schaumregulatorgranulats für den Einsatz in Wasch- und Reinigungsmitteln, enthaltend anorganisches,.. wasserlösliches und/oder wasserdispergierbares Trägersalz sowie Paraffinwachs, durch Aufbaugranulation, und die Verwendung der so hergestellten Granulate als schaumregulierende Bestandteile von Wasch- und Reinigungsmitteln.

Die Verwendung von Bisamiden als Entschäumer für Waschmittel ist aus der deutschen Offenlegungsschrift DE-A-20 43 087 bekannt Die dort genannten Rezepturen besitzen jedoch keine gleichmäßige Entschäumerwirkung über einen großen Temperaturbereich und weisen insbesondere bei niedrigen Waschtemperaturen Schwächen auf. In der EP-A-087 233 wird ein Verfahren zur Herstellung eines schwachschäumenden Waschmittels beschrieben, bei dem Gemische aus einer öligen beziehungsweise wachsartigen Substanz und Bisamiden auf ein Trägerpulver, insbesondere ein sprühgetrocknetes tensidhaltiges Waschmittel aufgetragen werden. Die ölige beziehungsweise wachsartige Substanz kann zum Beispiel aus Vaseline mit einem Schmelzpunkt von 20 °C bis 120 °C bestehen. In den Beispielen wird für diesen Zweck Mineralöl eingesetzt. Offensichtlich dient diese Komponente in erster Linie als Trägerbeziehungsweise Dispergiermittel für das Bisamid. Bei einem Einsatz von 2 Gewichtsprozent Entschäumergemisch, bezogen auf das Mittel, werden zwar nach dem Ross-Miles-Test befriedigende Werte erhalten, jedoch erscheinen diese Einsatzmengen für die Praxis viel zu hoch. Außerdem besteht bei dieser Art der Konfektionierung, nämlich dem Aufsprühen des Entschäumergemischs auf das sprühgetrocknete, tensidhaltige Waschmittel die Gefahr, daß sich das Herstellungsverfahren nachteilig auf die Lagerbeständigkeit der sich auschließlich an der Oberfläche des Schaumregulierungsmittels befindenden Schaumregulierungskomponente auswirkt mit dem Ergebnis, daß deren Aktivität mit zunehmender Lagerzeit abnimmt Um ihre Wirkung zu steigern und gleichzeitig die erforderliche Anwendungskonzentration herabzusetzen, werden diesen Entschäumern häufig weitere bekannte Schauminhibitoren zugesetzt, insbesondere Polysiloxane oder Polysiloxan-Kieselsäure-Gemische. Polysiloxane sind bei bekannt guter Entschäumerwirkung jedoch vergleichsweise aufwendig in der Herstellung, was sie als Rohstoffe in der Regel teurer als vergleichbare Wirksubstanzen macht, und besitzen den Nachteil, daß sie oft als in ihrer biologischen Abbaubarkeit im Abwasser nicht völlig befriedigend empfunden werden. Weitere Bisamide enthaltende Mittel sind aus der EP-A-075 437 und EP-A-094 250 bekannt. Dort beschriebene Mittel enthalten jedoch Silikone. Aus der deutschen Offenlegungsschrift DE-A-28 57 155 sind Waschmittel mit einem Schaumregulierungsmittel bekannt, das hydrophobes Siliziumdioxid und ein Gemisch aus festen und flüssigen Kohlenwasserstoffen, gegebenenfalls im Gemisch mit Fettsäureestern, enthält. In der europäischen Patentanmeldung EP-A-309 931 sind Schaumregulierungsmittel beschrieben worden, welche auf ein relativ aufwendiges Gemisch aus Paraffinwachs und mikrokristallinem Paraffinwachs angewiesen sind. Aus der internationalen Patentanmeldung WO-A-93/17772 sind Carbonsäure-bisamid-enthaltende Schaumregulierungsmittel auf Paraffin-Basis bekannt, bei deren Paraffinwachskomponente der Flüssiganteil so niedrig wie möglich liegt und vorzugsweise ganz fehlt. Dort besitzen bevorzugte Paraffinwachsgemische bei 30 °C einen Flüssiganteil von unter 10 Gew.-%, und bei 40 °C einen Flüssiganteil von unter 30 Gew.-%. Derartige Mittel weisen allerdings bei der in neuerer Zeit immer mehr Bedeutung gewinnenden maschinellen Wäsche im Niedrigtemperaturbereich in manchen Fällen eine als unzureichend empfundene Entschäumerleistung auf.

Aus der europäischen Patentanmeldung EP-A-0 008 829 sind feste Waschmittel bekannt, die ein Schaumkontrollierungssystem aus Wachs, hydrophobiertem Kieselgel, bestimmten nichtionischen Dispergierungsmitteln und gegebenenfalls Silikonen enthalten, das in inniger Mischung mit den übrigen Waschmittelbestandteilen vorliegt. Dabei kann das zuvor verflüssigte Schaumkontrollierungssystem auf ein vorgefertigtes, insbesondere sprühgetrocknetes Trägerkorn, das alle oder einen Teil der übrigen Waschmittelbestandteile enthält, aufgesprüht werden. Ein derartiges Herstellungsverfahren ist durch seine Mehrstufigkeit relativ aufwendig.

Aus der deutschen Offenlegungsschrift DE-A-34 36 194 ist ein Verfahren zur Herstellung schüttfähiger Schaumregulatorgranulate durch Sprühtrocknung einer wäßrigen Dispersion, die wasserunlöslichen Entschäumerwirkstoff, anorganisches Trägersalz und bestimmte Celluloseethergemische enthalten, bekannt. Ein derartiges Verfahren kann durch die thennische Belastung unter Sprühtrocknungsbedingungen insbesondere bei Verwendung von niedrigschmelzenden Paraffinwachsen zu Produkten führen, die nicht in allen Fällen optimale Entschäumerleistung aufweisen.

Wegen ihrer guten Wirksamkeit bei vom Verbraucher in verstärktem Maße angewendeten Niedrigtemperaturwaschprogrammen ist aber gerade der Einsatz solcher niedrigschmelzender Paraffine besonders interessant.

Die WO-A-92 20770 offenbart ebenfalls ein Verfahren zur Herstellung schüttfähiger Schaumregulatorgranulate.

Zusätzlich bestand die Aufgabe, ein Verfahren zur Herstellung stabiler Schaumregulatorzubereitungen zu entwickeln, die bei der Herstellung teilchenförmiger Wasch- und Reinigungsmittel den Mischprozeß mit den übrigen Wasch- oder Reinigungsmittelbestandteilen ohne Zerstörung ihrer granularen Struktur und ohne Staubbildung überstehen und sich dennoch unter Anwendungsbedingungen schnell und rückstandsfrei lösen und den schauminhibierenden Wirkstoff freisetzen.

Das erfindungsgemäße Verfahren zur Herstellung schüttfähiger Schaumregulatorgranulate, die eine Entschäumerwirkstoffkombination aus einem Paraffinwachs und einem von Diaminen und Carbonsäuren abgeleiteten Bisamid und anorganisches, wasserlösliches und/oder wasserdispergierbares Trägersalz enthalten, ist dadurch gekennzeichnet, daß man in einem Granulanonsmischer eine Aufbaugranulation derart durchführt, daß man eine Menge von 50 bis 100 Gewichtsteilen, insbesondere 60 bis 85 Gewichtsteilen des anorganischen Trägersalzes, vorzugsweise enthaltend Alkalisulfat und/oder Alkalicarbonat, gegegebenfalls mit einer Menge von bis zu 5 Gewichtsteilen, insbesondere 1 bis 3 Gewichtsteilen eines anionischen und/oder nichtionischen Celluloseethers intensiv mischt, unter weiterem Granulieren eine Menge von 1 bis 10 Gewichtsteilen, insbesondere 2 bis 8 Gewichtsteilen wäßriger Alkalisilikat- und/oder polymerer Polycarboxylat-Lösung zugibt, und daraufhin 10 Gewichtsteile der auf eine Temperatur im Bereich von 70 °C bis 180 °C erwärmten Entschäumerwirkstoffkombination zusetzt. Vorzugsweise werden nach der Zugabe der Entschäumerwirkstoffkombination 5 bis 20 Gewichtsteile, insbesondere 7 bis 15 Gewichtsteile Waser oder einer wäßrigen Natriumsilikat- und/oder polymerer Polycarboxylat-Lösung zugesetzt. In diesen Fällen erhält man einen besonders stabilen Kornaufbau. Bemerkenswert ist, daß man bei diesem Vorgehen nicht auf ein etwaiges Erwärmen des Trägermaterials angewiesen ist, sondern dieses bei Umgebungstemperatur beziehungsweise der Temperatur, die sich durch den Energieeintrag des Mischvorgangs ergibt, belassen kann.

Eine bevorzugte Ausführungsform des erfindungsgemäßen Verfahrens besteht darin, daß man das vorzugsweise phosphatfreie Trägersalzgemisch, gegebenenfalls nach Zugabe des Celluloseether-Gemisches, innerhalb eines Zeitraums von 5 Sekunden bis 30 Sekunden insbesondere in einem Zwangsmischer, zum Beispiel einem Fukae®-Mischer FS30, einem Eirich®-Mischer, einem Lödige®-Pflugscharmischer oder einem Shugi®-Mischer, homogenisiert, die wäßrige Alkalisilikat-Lösung zügig, das heißt möglichst rasch, zugibt, anschließend die flüssige geschmolzene Entschäumerwirkstoffkombination einträgt, danach, falls verwendet, das Wasser beziehungsweise die wäßrige Alkalisilikat- und/oder Polycarboxylat-Lösung innerhalb eines Zeitraums von 10 Sekunden bis 30 Sekunden zusetzt und noch 10 Sekunden bis 10 Minuten granuliert. Dabei können die in flüssiger Form eingesetzten Inhaltsstoffe über die in Granulationsmischern üblicherweise vorhandenen Spritzdüsen eingebracht werden.

Die Entschäumerwirkstoffkombination besteht vorzugsweise aus 70 Gew.-% bis 95 Gew.-% Paraffinwachs beziehungsweise Paraffinwachsgemisch sowie 5 Gew.-% bis 30 Gew.-% eines von C₂₋₇-Diaminen und gesättigten C₁₂₋₂₂-Carbonsäuren abgeleiteten Bisamids. Das Paraffinwachs ist bei Raumtemperatur fest und liegt vorzugsweise bei einer Temperatur von 40 °C zu mindestens 35 Gew.-%, insbesondere zu mindestens 45 Gew.-%, und weniger als 100 Gew.-% in flüssiger Form vor.

Das in der Entschäumerwirkstoffkombination enthaltene Paraffinwachs stellt im allgemeinen ein komplexes Stoffgemisch ohne scharfen Schmelzpunkt dar. Zur Charakterisierung bestimmt man üblicherweise seinen Schmelzbereich durch Differential-Thermo-Analyse (DTA), wie in "The Analyst" 87 (1962), 420, beschrieben, und/oder seinen Erstarrungspunkt. Darunter versteht man die Temperatur, bei der das Wachs durch langsames Abkühlen aus dem flüssigen in den festen Zustand übergeht. Paraffine mit weniger als 17 C-Atomen sind erfindungsgemäß nicht brauchbar, ihr Anteil im Paraffinwachsgemisch sollte daher so gering wie möglich sein und liegt vorzugsweise unterhalb der mit üblichen analytischen Methoden, zum Beispiel Gaschromatographie, signifikant meßbaren Grenze. Vorzugsweise werden Wachse verwendet, die im Bereich von 20 °C bis 70 °C erstarren. Dabei ist zu beachten, daß auch bei Raumtemperatur fest erscheinende Paraffinwachsgemische unterschiedliche Anteile an flüssigem Paraffin enthalten können. Bei den erfindungsgemäß brauchbaren Paraffinwachsen liegt der Flüssiganteil bei 40 °C möglichst hoch, ohne bei dieser Temperatur schon 100 % zu betragen. Bevorzugte Paraffinwachsgemische weisen bei 40 °C einen Flüssiganteil von mindestens 50 Gew.-%, insbesondere von 55 Gew.-% bis 80 Gew.-%, und bei 60 °C einen Flüssiganteil von mindestens 90 Gew.-% auf. Dies hat zur Folge, daß die Paraffine bei Temperaturen bis hinunter zu mindestens 70 °C, vorzugsweise bis hinunter zu mindestens 60 °C fließfähig und pumpbar sind. Außerdem ist darauf zu achten, daß die Paraffine möglichst keine flüchtigen Anteile enthalten. Bevorzugte Paraffinwachse enthalten weniger als 1 Gew.-%, insbesondere weniger als 0,5 Gew.-% bei 110 °C und Normaldruck verdampfbare Anteile. Erfindungsgemäß brauchbare Paraffinwachse können beispielsweise unter den Handelsbezeichnungen Lunaflex® der Firma Füller sowie Deawax® der DEA Mineralöl AG bezogen werden.

Die zweite Komponente der Entschäumerwirkstoffkombination besteht aus Bisamiden, die sich von gesättigten Fettsäuren mit 12 bis 22, insbesondere 14 bis 18 C-Atomen sowie von Alkylendiaminen mit 2 bis 7 C-Atomen ableiten. Zu den geeigneten Fettsäuren gehören zum Beispiel Laurin-, Myristin-, Stearin-, Arachin- und Behensäure sowie deren Gemische, wie sie aus natürlichen Fetten beziehungsweise gehärteten Ölen, wie Talg oder hydriertem Palmöl, erhältlich sind. Geeignete Diamine sind beispielsweise Ethylendiamin 1,3-Propylendiamin, Tetramethylendiamin, Pentamethylendiamin, Hexamethylendiamin, p-Phenylendiamin und Toluylendiamin. Bevorzugte Diamine sind Ethylendiamin und Hexamethylendiamin. Besonders bevorzugte Bisamide sind Bis-myristoyl-ethylendiamin, Bis-palmitoyl-ethylendiamin, Bis-stearoyl-ethylendiamin und deren Gemische sowie die entsprechenden Derivate des Hexamethylendiamins.

Die Bisamide liegen vorzugsweise, wie in der EP-A-0 309 931 beschrieben, in feinverteilter Form vor und weisen insbesondere eine mittlere Korngröße von weniger als 50 µm auf. Vorzugsweise liegt die maximale Komgröße der Partikel unter 20 µm, wobei mindestens 50 %, insbesondere mindestens 75 % der Partikel kleiner als 10 µm sind.

Die Herstellung der Entschäumerwirkstoffkombination kann in der Weise erfolgen, daß man in eine Schmelze des Paraffinwachses das feinteilige Bisamid einträgt und durch intensives Vermischen darin homogenisiert. Die Schmelze sollte dazu eine Temperatur von mindestens 90 °C und höchstens 200 °C aufweisen. Vorzugsweise beträgt die Temperatur, bei der man die Paraffinwachsschmelze hält, um sie auf das Trägermaterial aufzubringen, 100 °C bis 150 °C. Wesentlich für eine gute Wirksamkeit des Entschäumers ist das Vorliegen einer stabilen Dispersion der Bisamid-Teilchen in der Paraffinmatrix, was durch eine der genannten Definition entsprechende Teilchengröße bewirkt werden kann. Zwecks Erzielung dieses Dispersionszustandes kann man ein Bisamid einsetzen und dispergieren, das von vornherein die entsprechende Teilchengröße aufweist, oder man verwendet ein grobteiligeres Ausgangsmaterial und unterwirft die Schmelze einer intensiven Rührbehandlung oder einer Mahlbehandlung mittels Kolloidmühlen, Zabnmühlen oder Kugelmühlen, bis die erwünschte Teilchengröße erreicht ist. Auch ein vollständiges Aufschmelzen der Bisamide in der Paraffinschmelze und anschließendes Abkühlen auf Temperaturen unterhalb des Erstarrungspunktes der Bisamide durch Aufbringen auf das kältere Trägermaterial kann zu einer entsprechend feinen Kornverteilung der Bisamide führen.

Das vorzugsweise phosphatfreie Trägersalzgemisch für die Entschäumerwirkstoffkombination enthält gut wasserlösliche anorganische Salze wie zum Beispiel Alkalisulfate, Alkalicarbonate und/oder Alkalisilikate. In einer bevorzugten Ausführungsform der Erfindung enthält es sowohl Alkalicarbonat als auch Alkalisulfat, wobei insbesondere letzteres für die guten Lösungseigenschaften der erfindungsgemäßen Granulate verantwortlich ist. Das Trägermaterial kann zusätzlich weitere wasserlösliche oder wasserunlösliche, wasserdispergierbare Stoffe enthalten. Zu den zusätzlich verwendbaren Trägermaterialien gehören insbesondere Alkalichloride, Erdalkalisilikate, Alumosilikate, beispielsweise Zeolith A, P und X, und Schichtsilikate, beispielsweise Bentonit Derartige zusätzliche Trägermaterialien sind vorzugsweise nicht über 20 Gew.-%, insbesondere in Mengen von 1 Gew.-% bis 15 Gew.-%, bezogen auf fertiges Granulat, in dem Trägersalzgemisch enthalten.

Zu den erfindungsgemäß brauchbaren Celluloseethem gehören insbesondere Alkalicarboxymethylcellulose, Methylcellulose, Ethylcellulose, Hydroxyethylcellulose und sogenannte Cellulosemischether wie zum Beispiel Methylhydroxyethylcellulose und Methylhydroxypropylcellulose und deren Mischungen. Vorzugsweise werden Mischungen aus Natrium-Carboxymethylcellulose und Methylcellulose eingesetzt, wobei die Carboxymethylcellulose üblicherweise einen Substitutionsgrad von 0,5 bis 0,8 Carboxymethylgruppen pro Anhydroglukoseeinheit und die Methylcellulose einen Substitutionsgrad von 1,2 bis 2 Methylgruppen pro Anhydroglukoseeinheit aufweist. Derartige Celluloseether werden im Rahmen des erfindungsgemäßen Verfahrens normalerweise in fester Form eingesetzt, können aber auch als wäßrige Lösungen verwendet werden, die in üblicher Weise vorgequollen sein können. Celluloseethergemische enthalten vorzugsweise Alkalicarboxymethylcellulose und nichtionischen Celluloseether in Gewichtsverhältnissen von 80:20 bis 40:60, insbesondere von 75:25 bis 50:50.

Bei dem im Trägermaterial in fester Form wie auch in Form der genannten wäßrigen Lösung brauchbaren Alkalisilikat handelt es sich vorzugsweise um ein Natriumsilikat mit einem Molverhältnis Na₂O zu SiO₂ von 1:2 bis 1:3,35. Die Verwendung derartiger Silikate resultiert in besonders guten Korneigenschaften, insbesondere hoher Abriebsstabilität und hoher Auflösungsgeschwindigkeit in Wasser. Die wäßrige Alkalisilikatlösung, falls verwendet, enthält vorzugsweise 25 Gew.-% bis 60 Gew.-%, insbesondere 30 Gew.-% bis 40 Gew.-% Alkalisilikat.

Zu den gegebenenfalls eingesetzten polymeren Polycarboxylaten gehören insbesondere die durch Oxidation von Polysacchariden zugänglichen Polycarboxylate der internationalen Patentanmeldung WO-A-93/16110 sowie polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können. Die relative Molekülmasse der Homopolymeren ungesättiger Carbonsäuren liegt im allgemeinen zwischen 5 000 und 200 000, die der Copolymeren zwischen 2 000 und 200 000, vorzugsweise 50 000 bis 120 000, jeweils bezogen auf freie Säure. Ein besonders bevorzugtes Acrylsäure-Maleinsäure-Copolymer weist eine relative Molekülmasse von 50 000 bis 100 000 auf. Geeignete, wenn auch weniger bevorzugte Verbindungen dieser Klasse sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt. Es können auch Terpolymere eingesetzt werden, die als Monomere zwei ungesättigte Säuren und/oder deren Salze sowie als drittes Monomer Vinylalkohol und/oder ein Vinylalkohol-Derivat oder ein Kohlenhydrat enthalten. Das erste saure Monomer beziehungsweise dessen Salz leitet sich von einer monoethylenisch ungesättigten C₃-C₈-Carbonsäure und vorzugsweise von einer C₃-C₄-Monocarbonsäure. insbesondere von (Meth)-acrylsäure ab. Das zweite saure Monomer beziehungsweise dessen Salz kann ein Derivat einer C₄-C₈-Dicarbonsäure sein, wobei Maleinsäure besonders bevorzugt ist. Die dritte monomere Einheit wird in diesem Fall von Vinylalkohol und/oder vorzugsweise einem veresterten Vinylalkohol gebildet. Insbesondere sind Vinylalkohol-Derivate bevorzugt, welche einen Ester aus kurzkettigen Carbonsäuren, beispielsweise von C₁-C₄-Carbonsäuren, mit Vinylalkohol darstellen. Bevorzugte Polymere enthalten dabei 60 Gew.-% bis 95 Gew.-%, insbesondere 70 Gew.-% bis 90 Gew.-% (Meth)acrylsäure bzw. (Meth)acrylat, besonders bevorzugt Acrylsäure bzw. Acrylat, und Maleinsäure bzw. Maleat sowie 5 Gew.-% bis 40 Gew.-%, vorzugsweise 10 Gew.-% bis 30 Gew.-% Vinylalkohol und/oder Vinylacetat. Ganz besonders bevorzugt sind dabei Polymere, in denen das Gewichtsverhältnis von (Meth)acrylsäure beziehungsweise (Meth)acrylat zu Maleinsäure beziehungsweise Maleinat zwischen 1:1 und 4:1, vorzugsweise zwischen 2:1 und 3:1 und insbesondere 2:1 und 2,5:1 liegt. Dabei sind sowohl die Mengen als auch die Gewichtsverhältnisse auf die Säuren bezogen. Das zweite saure Monomer beziehungsweise dessen Salz kann auch ein Derivat einer Allylsulfonsäure sein, die in 2-Stellung mit einem Alkylrest, vorzugsweise mit einem C₁-C₄-Alkylrest, oder einem aromatischen Rest, der sich vorzugsweise von Benzol oder Benzol-Derivaten ableitet, substituiert ist. Bevorzugte Terpolymere enthalten dabei 40 Gew.-% bis 60 Gew.-%, insbesondere 45 bis 55 Gew.-% (Meth)acrylsäure beziehungsweise (Meth)acrylat, besonders bevorzugt Acrylsäure beziehungsweise Acrylat, 10 Gew.-% bis 30 Gew.-%, vorzugsweise 15 Gew.-% bis 25 Gew.-% Methallylsulfonsäure beziehungsweise Methallylsulfonat und als drittes Monomer 15 Gew.-% bis 40 Gew.-%, vorzugsweise 20 Gew.-% bis 40 Gew.-% eines Kohlenhydrats. Dieses Kohlenhydrat kann dabei beispielsweise ein Mono-, Di-, Oligo- oder Polysaccharid sein, wobei Mono-, Di- oder Oligosaccharide bevorzugt sind. Besonders bevorzugt ist Saccharose. Durch den Einsatz des dritten Monomers werden vermutlich Sollbruchstellen in das Polymer eingebaut, die für die gute biologische Abbaubarkeit des Polymers verantwortlich sind. Diese Terpolymere lassen sich insbesondere nach Verfahren herstellen, die in der DE-A-42 21 381 und der DE-A-43 00 772 beschrieben sind, und weisen im allgemeinen eine relative Molekülmasse zwischen 1 000 und 200 000, vorzugsweise zwischen 200 und 50 000 und insbesondere zwischen 3 000 und 10000 auf. Weitere bevorzugte Copolymere sind solche, die in der DE-A-43 03 320 und DE-A-44 17 734 beschrieben werden und als Monomere vorzugsweise Acrolein und Acrylsäure/Acrylsäuresalze beziehungsweise Vinylacetat aufweisen. Die polymeren Polycarboxylate werden vorzugsweise in Form 30- bis 50-gewichtsprozentiger wäßriger Lösungen eingesetzt. Alle genannten Säuren werden in der Regel in Form ihrer wasserlöslichen Salze, insbesondere ihre Alkalisalze, eingesetzt.

Die nach dem erfindungsgemäßen Verfahren herstellbaren, für den Einsatz in Wasch- oder Reinigungsmitteln geeigneten Schaumregulatorgranulate enthalten vorzugsweise 60 Gew.-% bis 90 Gew.-% anorganisches Trägersalz beziehungsweise Trägersalzgemisch, 0,5 Gew.-% bis 5 Gew.-% eines Gemisches aus Alkalicarboxymethylcellulose und nichtionischem Celluloseether, insbesondere im Gewichtsverhältnis 80:20 bis 40:60, 5 Gew.-% bis 30 Gew.-%, insbesondere 8 Gew.-% bis 20 Gew.-% Entschäumerwirkstoffkombination, 0,5 Gew.-% bis 10 Gew.-%, insbesondere 1 Gew.-% bis 5 Gew.-% Alkalisilikat, 0,5 Gew.-% bis 10 Gew.-%, insbesondere 1 Gew.-% bis 5 Gew.-% polymeres Polycarboxylat und bis zu 15 Gew.-%, insbesondere 2 Gew.-% bis 10 Gew.-% Wasser. Ein Wassergehalt im angegebenen Bereich stellt sich normalerweise von selbst ein, wenn man die erfindungsgemäßen Verfahrensparameter einhält. Ein erfindungsgemäß hergestelltes Schaumregulatorgranulat kann aber auch im Anschluß an die Aufbaugranulationsschritte einer Trocknung in üblicher Weise, zum Beispiel unter Verwendung von Wirbelbett-Trocknern, unterworfen werden, falls der Wassergehalt zu hoch liegt.

Erfindungsgemäß hergestellte Schaumregulatoren sind vorzugsweise frei von emulgierend beziehungsweise dispergierend wirkenden Tensiden. Unter Tensiden sind oberflächenaktive Verbindungen mit hydrophobem Molekülteil und hydrophilen anionischen, ampholytischen, zwitterionischen, kationischen und nichtionischen Gruppen zu verstehen, die in wäßriger Lösung oder Dispersion eine reinigende beziehungsweise emulgierende Wirkung entfalten. Der hydrophobe Molekülteil besteht im allgemeinen aus einem Kohlenwasserstoffrest beziehungsweise einem substituierten Kohlenwasserstoffrest oder einem in Wasser schwer löslichen Polyglykoletherrest, zum Beispiel einem Polypropylenglykol- beziehungsweise Polybutylenglykol-Etherrest. Verbindungen mit nicht-, polarem Molekülaufbau, insbesondere die genannten Celluloseether oder polymeren Polycarboxylate, die unter bestimmten Voraussetzungen in Wasser ebenfalls eine Dispergierwirkung entfalten können, fallen nicht unter die Definition "Tenside" und können enthalten sein.

Die erfindungsgemäßen Entschäumergranulate besitzen normalerweise Schüttgewichte im Bereich von 600 Gramm pro Liter bis 1400 Gramm pro Liter, insbesondere 800 Gramm pro Liter bis 1200 Gramm pro Liter. In der Regel weisen mehr als 80 Gew.-%, vorzugsweise mehr als 90 Gew.-% und insbesondere mehr als 95 Gew.-% des Granulats Komgrößen im Bereich von 0,1 mm bis 2,0 mm auf. In einer bevorzugten Ausführungsform liegt die mittlere Teilchengröße der Entschäumergranulate im Bereich von 0,4 mm bis 0,8 mm, wobei besonders bevorzugt möglichst geringe Anteile des Granulats Teilchengrößen außerhalb dieses Bereichs aufweisen.

Die nach dem erfindungsgemäßen Verfahren herstellbaren Entschäumergranulate sind lagerstabil, lassen sich problemlos ohne Staubbildung mit üblichen pulverförmigen Wasch- und Reinigungsmittelbestandteilen mischen und werden rückstandsfrei in Waschmaschinen eingespült Ein weiterer Gegenstand der Erfindung ist daher ihre Verwendung als schaumregulierende Bestandteile von Wasch- und Reinigungsmitteln. Sie lösen sich schon bei Temperaturen unter 60 °C rasch auf und geben somit auch bei Niedrigtemperaturwaschbedingungen beziehungsweise schon in der Anfangsphase der Hochtemperaturwäsche den schauminhibierenden Wirkstoff frei, wobei ihre Entschäumerleistung über den gesamten Waschzyklus gleichbleibend hoch ist.

Die erfindungsgemäßen Entschäumergranulate zeichnen sich insbesondere auch dadurch aus, daß der Entschäumerwirkstoff in den fertigen Partikeln im Unterschied zu sprühgetrockneten Zubereitungen eine erhöhte Wirksamkeit besitzt. Die erfindungsgemäßen Granulate weisen eine Entschäumerleistung auf, die von sprühgetrockneten Erzeugnissen ähnlicher Zusammensetzung nur mit höheren Mengen an eingesetztem Wirkstoff erreicht wird.

### Beispiele

### Beispiel 1

In einem 1351 Lödige®-Pflugschar-Mischer wurden 16,2 kg Natriumsulfat und 0,5 kg eines 66 Gew.-% Akrivsubstanz (Rest Natriumchlorid und Natriumglykolat) enthaltenden Gemisches aus Natrium-Carboxymethylcellulose und Methylcellulose (Gewichtsverhältnis etwa 70:30) innerhalb von 15 Sekunden mit eingeschaltetem Zerhacker homogenisiert. Innerhalb von 15 Sekunden wurden 0,5 kg einer 34-gewichtsprozentigen wäßrigen Natriumsilikat-Lösung und anschließend 0,7 kg einer wäßrigen 34-gewichtsprozentigen Lösung von polymerem Polycarboxylat eingetragen. Danach wurden 2 kg einer auf 150°C erhitzten Schmelze aus 88 Gew.-% Paraffin (Erstarrungspunkt nach DIN ISO 2207 45 °C, Flüssiganteil bei 40 °C ca. 66 Gew.-%, bei 60 °C ca. 96 %) und 12 Gew.-% Ethylendiamin-bistearoylamid innerhalb von 180 Sekunden eingedüst. Im Anschluß wurden innerhalb von 30 Sekunden 1,6 kg Wasser zugegeben und noch 120 Sekunden nachgemischt. Anschließend wurde das Feuchtgranulat in einem Wirbelbett-Trockner bei 80 °C getrocknet. Man erhielt ein hartkörniges, trockenes und gut rieselfähiges Entschäumergranulat **G1** mit einem Schüttgewicht von 1200 Gramm pro Liter, das zu 98 Gew.-% aus Teilchen mit Korngrößen über 0,1 mm und zu 60 Gew.-% aus Teilchen mit Korngrößen von 0,8 mm bis 2,0 mm bestand.

### Beispiel 2

Durch einfaches Vermischen von jeweils 1,5 Gew.-% an Schaumregulatorgranulat **B1** beziehungsweise **V1** mit einem üblichen Universalwaschmittelbasispulver, welches 21 Gew.-% Zeolith Na-A, 20 Gew.-% Natriumsulfat, 3 Gew.-% Natriumsilikat, 10 Gew.-% Natriumcarbonat, 3,5 Gew.-% polymeres Polycarboxylat (Sokalan® CP5), 8 Gew.-% Natriumalkylbenzolsulfonat, 2 Gew.-% Niotensid, 1,5 Gew.-% Seife, 22 Gew-% Natriumperborat und 2 Gew.-% TAED, Rest auf 100 Gew.-% Wasser enthielt, wurden Waschmittel hergestellt. Durch Waschversuche (Trommelwaschmaschine Miele® W 918, 3,5 kg saubere Wäsche, Wasserhärte 3 °d, Dosierung 130 g Waschmittel) wurde belegt, daß die erfindungsgemäßen Schaumregulatoren insbesondere bei niedrigen Temperaturen wirksamer sind als ein zum Vergleich getesteter Schaumregulator des Standes der Technik (**V1**), der die gleichen Inhaltsstoffe wie **B1** enthielt, aber durch Sprühtrocknung hergestellt worden war und daher ein thermisch belastbareres höherschmelzendes Paraffin (Flüssiganteil bei 40 °C ca. 9 Gew.-%, bei 60 °C ca. 66 %) enthalten mußte. Man erhielt die in der nachfolgenden Tabelle 2 angegebenen Schaumnoten (Skala von 0 bis 6; 0 = kein Schaum; 3 = Schauglas der Waschmaschine zur Hälfte mit Schaum gefüllt; 5 = Schauglas der Waschmaschine vollständig mit Schaum gefüllt; 6 = Flottenverlust durch Überschäumen; abgelesen wurde beim Waschen im 40 °C-Programm nach der angegebenen Waschdauer und beim 90 °C-Programm im angegebenen Temperaturbereich). Nach Lagerung (8 Wochen in kaschierten Kartons bei 30 °C und 80 % relativer Luftfeuchte) des Waschmittels mit dem erfindungsgemäßen Schaumregulatorgranulat **B1** ergaben sich keine Verschlechterungen der Entschäumerleistung.

**Tabelle 2:**

| Schaumnoten der Schaumregulatoren im Waschmittel | | | | | | |
|---|---|---|---|---|---|---|
| | 40 °C | | | 90 °C | | |
| Schaumregulator | < 20 min | < 40 min | > 40 min | < 55 °C | < 75 °C | > 75 °C |
| **B1** | 0-1 | 0-2 | 0-2 | 0-1 | 0-2,5 | 2,0-3,5 |
| **V1** | >4 | >4 | >4 | >4 | >4 | >4 |

## Patentansprüche

1. Verfahren zur Herstellung schüttfähiger Schaumregulatorgranulate, die eine Entschäumerwirkstoffkombination aus einem Paraffinwachs und einem von Diaminen und Carbonsäuren abgeleiteten Bisamid und anorganisches, wasserlösliches und/oder wasserdispergierbares Trägersalz enthalten, wobei man in einem Granulationsmischer eine Aufbaugranulation derart durchführt, daß man eine Menge von 50 bis 100 Gewichtsteilen des anorganischen Trägersalzes, gegegebenfalls mit einer Menge von bis zu 5 Gewichtsteilen eines anionischen und/oder nichtionischen Celluloseethers intensiv mischt, eine Menge von 1 bis 10 Gewichtsteilen wäßriger Alkalisilikat- und/oder polymerer Polycarboxylat-Lösung zugibt, und daraufhin 10 Gewichtsteile der auf eine Temperatur im Bereich von 70 °C bis 180 °C erwärmten Entschäumerwirkstoffkombination zusetzt.

2. Verfahren nach Anspruch 1, **dadurch gekennzeichnet, daß** man nach der Zugabe der Entschäumerwirkstoffkombination 5 bis 20 Gewichtsteile, insbesondere 7 bis 15 Gewichtsteile Waser oder einer wäßrigen Natriumsilikat- und/oder polymerer Polycarboxylat-Lösung zusetzt

3. Verfahren nach Anspruch 1 oder 2. **dadurch gekennzeichnet, daß** man 60 bis 85 Gewichtsteile des anorganischen Trägersalzes, 1 bis 3 Gewichtsteile des Celluloseethers und/oder 2 bis 8 Gewichtsteile wäßriger Alkalisilikat- und/oder organischer Polycarboxylat-Lösung einsetzt.

4. Verfahren nach einem der Ansprüche 1 bis 3, **dadurch gekennzeichnet, daß** man das Trägersalzgemisch, gegebenenfalls nach Zugabe des Celluloseether-Gemisches. innerhalb eines Zeitraums von 5 Sekunden bis 30 Sekunden homogenisiert, die wäßrige Alkalisilikat-Lösung und/oder Polycarboxylat-Losung zügig zugibt, anschließend die flüssige geschmolzene Entschäumerwirkstoffkombination einträgt, danach, falls verwendet, das Wasser bezichungsweise die waßrige Alkalisilikat- und/oder Polycarboxylat-Lösung und/oder wäßrige Celluloseethergemisch-Lösung innerhalb eines Zeitraums von 10 Sekunden bis 30 Sekunden zusetzt und noch 10 Sekunden bis 10 Minuten granuliert.

5. Verfahren nach einem der Ansprüche 1 bis 4, **dadurch gekennzeichnet, daß** die Entschäumerwirkstoffkombination aus 70 Gew.-% bis 95 Gew.-% Paraffinwachs und 5 Gew.-% bis 30 Gew.-% eines von C₂₋₇-Diaminen und gesättigten C₁₂₋₂₂-Carbonsäuren abgeleiteten Bisamids bestelit.

6. Verfahren 5, **dadurch gekennzeichnet, daß** das Paraffinwachs bei Raumtemperatur fest ist und bei einer Temperatur von 40 °C zu mindestens 35 Gew.-%, insbesondere zu mindestens 45 Gew.-%, und weniger als 100 Gew.-% in flüssiger Form vorliegt.

7. Verfahren nach einem der Ansprüche 1 bis 6, **dadurch gekennzeichnet, daß** das polymere Polycarboxylat unter den durch Oxidation von Polysacchariden zugänglichen Polycarboxylaten sowie den polymeren Acrylsäuren, Methacrylsäuren, Maleinsäuren und Mischpolymeren aus diesen, die auch geringe Anteile polymerisierbarer Substanzen ohne Carbonsäurefunktionalität einpolymerisiert enthalten können, ausgewählt wird.

8. Verfahren nach einem der Ansprüche 1 bis 7, **dadurch gekennzeichnet, daß** als polymere Polycarboxylate Ter- beziehungsweise Quaterpolymere eingesetzt werden, die als Monomere zwei ungesättigte Säuren und/oder deren Salze sowie als drittes beziehungsweise viertes Monomer Vinylalkohol und/oder ein Vinylalkohol-Derivat und/oder ein Kohlenhydrat enthalten.

9. Verfahren nach einem der Ansprüche 1 bis 7, **dadurch gekennzeichnet, daß** der Celluloseether unter Alkalicarboxymethylcellulose, Methylcellulose, Ethylcellulose, Hydroxyethylcellulose und sogenannten Cellulosemischethern wie Methylhydroxyethylcellulose und Methylhydroxypropylcellulose und deren Mischungen ausgewählt wird.

10. Schaumregulatorgranulat, erhältlich nach dem Verfahren gemäß einem der Ansprüche 1 bis 9, wobei es 60 Gew.-% bis 90 Gew.-% anorganisches Trägersalz beziehungsweise Trägersalzgemisch, 0,5 Gew.-% bis 5 Gew.-% eines Gemisches aus Alkalicarboxymethylcellulose und nichtionischem Celluloseether, insbesondere im Gewichtsverhältnis 80:20 bis 40:60, 5 Gew.-% bis 30 Gew.-%, insbesondere 8 Gew.-% bis 20 Gew.-% der Entschäumerwirkstoffkombination, 0,5 Gew.-% bis 10 Gew.-%, insbesondere 1 Gew.-% bis 5 Gew.-% Alkalisilikat, 0,5 Gew.-% bis 10 Gew.-%, insbesondere 1 Gew.-% bis 5 Gew.-% polymeres Polycarboxylat und bis zu 15 Gew.-%, insbesondere 2 Gew.-% bis 10 Gew.-% Wasser enthält.

11. Schaumregulatorgranulat nach Anspruch 10, **dadurch gekennzeichnet, daß** es ein Schüttgewicht von 600 Gramm pro Liter bis 1400 Gramm pro Liter, insbesondere 800 Gramm pro Liter bis 1200 Gramm pro Liter aufweist.

12. Schaumregulatorgranulat nach Anspruch 10 oder 11, **dadurch gekennzeichnet, daß** mehr als 80 Gew.-%, vorzugsweise mehr als 90 Gew.-% und insbesondere mehr als 95 Gew.-% des Granulats Korngrößen im Bereich von 0,1 mm bis 2,0 mm aufweisen.

13. Schaumregulatorgranulat nach einem der Ansprüche 10 bis 12, **dadurch gekennzeichnet, daß** die mittlere Teilchengröße im Bereich von 0,4 mm bis 0,8 mm liegt, wobei vorzugsweise möglichst geringe Anteile des Granulats Teilchengrößen außerhalb dieses Bereichs aufweisen.

14. Verwendung von Schaumregulatorgranulaten gemäß einem der Ansprüche 10 bis 13 oder hergestellt nach dem Verfahren gemäß einem der Ansprüche 1 bis 9 als schaumregulierende Bestandteile von Wasch- und Reinigungsmitteln.

## Claims

1. A process for producing pourable foam regulator granules containing a defoamer combination of a paraffin wax and a bisamide derived from diamines and carboxylic acids and inorganic, water-soluble and/or water-dispersible carrier salt, a pelletizing step being carried out in a granulation mixer by intensively mixing a quantity of 50 to 100 parts by weight of the inorganic carrier salt optionally with a quantity of up to 5 parts by weight of an anionic and/or nonionic cellulose ether, adding a quantity of 1 to 10 parts by weight of an aqueous alkali metal silicate and/or polymeric polycarboxylate solution and then adding 10 parts by weight of the defoamer combination heated to a temperature of 70°C to 180°C.

2. A process as claimed in claim 1, **characterized in that** 5 to 20 parts by weight and, more particularly, 7 to 15 parts by weight of water or an aqueous sodium silicate and/or polymeric polycarboxylate solution are added after the defoamer combination.

3. A process as claimed in claim 1 or 2, **characterized in that** 60 to 85 parts by weight of the inorganic carrier salt, 1 to 3 parts by weight of the cellulose ether and/or 2 to 8 parts by weight of aqueous alkali metal silicate and/or organic polycarboxylate solution are used.

4. A process as claimed in any of claims 1 to 3, **characterized in that** the carrier salt mixture is homogenized, optionally after addition of the cellulose ether mixture, for 5 seconds to 30 seconds, the aqueous alkali metal silicate solution and/or polycarboxylate solution is rapidly added, after which the liquid molten defoamer combination is introduced and the water or the aqueous alkali metal silicate solution and/or polycarboxylate solution and/or aqueous cellulose ether mixture solution, if used, is added over a period of 10 seconds to 30 seconds and the whole is granulated for 10 seconds to 10 minutes.

5. A process as claimed in any of claims 1 to 4, **characterized in that** the defoamer combination consists of 70% by weight to 95% by weight of paraffin wax and 5% by weight to 30% by weight of a bisamide derived from C₂₋₇ diamines and saturated C₁₂₋₂₂ carboxylic acids.

6. A process as claimed in claim 5, **characterized in that** the paraffin wax is solid at room temperature, at least 35% by weight, more particularly at least 45% by weight and less than 100% by weight being present in liquid form at a temperature of 40°C.

7. A process as claimed in any of claims 1 to 6, **characterized in that** the polymeric polycarboxylate is selected from polycarboxylates obtainable by oxidation of polysaccharides and polymeric acrylic acids, methacrylic acids, maleic acids and copolymers thereof which may also contain small quantities of polymerizable substances with no carboxylic acid functionality in copolymerized form.

8. A process as claimed in any of claims 1 to 7, **characterized in that** the polymeric polycarboxylates used are terpolymers or quaterpolymers which contain two unsaturated acids and/or salts thereof as monomers and vinyl alcohol and/or a vinyl alcohol derivative and/or a carbohydrate as the third or fourth monomer.

9. A process as claimed in any of claims 1 to 7, **characterized in that** the cellulose ether is selected from alkali metal carboxymethyl cellulose, methyl cellulose, ethyl cellulose, hydroxyethyl cellulose and so-called cellulose mixed ethers, such as methyl hydroxyethyl cellulose and methyl hydroxypropylcellulose and mixtures thereof.

10. Foam regulator granules obtainable by the process claimed in any of claims 1 to 9, the granules containing 60% by weight to 90% by weight of inorganic carrier salt or carrier salt mixture, 0.5% by weight to 5% by weight of a mixture of alkali metal carboxymethyl cellulose and nonionic cellulose ether, more particularly in a ratio by weight of 80:20 to 40:60, 5% by weight to 30% by weight and, more particularly, 8% by weight to 20% by weight of the defoamer combination, 0.5% by weight to 10% by weight and, more particularly, 1% by weight to 5% by weight of alkali metal silicate, 0.5% by weight to 10% by weight and, more particularly, 1% by weight to 5% by weight of polymeric polycarboxylate and up to 15% by weight and, more particularly, 2% by weight to 10% by weight of water.

11. Foam regulator granules as claimed in claim 10, **characterized in that** they have a bulk density of 600 grams per litre to 1400 grams per litre and, more particularly, 800 grams per litre to 1200 grams per litre.

12. Foam regulator granules as claimed in claim 10 or 11, **characterized in that** more than 80% by weight, preferably more than 90% by weight and, in particular, more than 95% by weight of the granules have particle sizes of 0.1 mm to 2.0 mm.

13. Foam regulator granules as claimed in any of claims 10 to 12, **characterized in that** the mean particle size is in the range from 0.4 mm to 0.8 mm, preferably only very small numbers of the granules having particle sizes outside that range.

14. The use of the foam regulator granules claimed in any of claims 10 to 13 or produced by the process claimed in any of claims 1 to 9 as foam-regulating components of laundry and dishwashing detergents.

## Revendications

1. Procédé de production de granulés de régulateur de mousse déversables, qui renferment une association de substances actives antimousse constituée d'une cire de paraffine et d'un bisamide dérivé de diamines et d'acides carboxyliques, et un sel porteur inorganique, soluble et/ou dispersible dans l'eau, dans lequel on opère une granulation par accumulation dans un mélangeur de granulation de manière telle que l'on mélange intensément une proportion de 50 à 100 parties en poids du sel porteur inorganique, le cas échéant avec une proportion allant jusqu'à 5 parties en poids d'un éther de cellulose anionique et/ou non ionique, on ajoute une proportion de 1 à 10 parties en poids d'une solution aqueuse de silicate de métal alcalin et/ou de polycarboxylate polymère, et on ajoute ensuite 10 parties en poids de l'association de substances actives antimousse chauffée à une température comprise dans l'intervalle de 70 à 180 °C.

2. Procédé selon la revendication 1, **caractérisé en ce qu'**après avoir ajouté l'association de substances actives antimousse, on ajoute 5 à 20 parties en poids, en particulier 7 à 15 parties en poids d'eau ou d'une solution aqueuse de silicate de sodium et/ou de polycarboxylate polymère.

3. Procédé selon la revendication 1 ou 2, **caractérisé en ce que** l'on met en oeuvre 60 à 85 parties en poids du sel porteur inorganique, 1 à 3 parties en poids de l'éther de cellulose et/ou 2 à 8 parties en poids de la solution aqueuse de silicate de métal alcalin et/ou de polycarboxylate organique.

4. Procédé selon une des revendications 1 à 3, **caractérisé en ce que** l'on homogénéise le mélange de sels porteurs, le cas échéant après avoir ajouté le mélange d'éther de cellulose, en un laps de temps de 5 à 30 secondes, on ajoute la solution aqueuse de silicate de métal alcalin et/ou de polycarboxylate sans interruption, on introduit ensuite l'association de substances actives antimousse fondue liquide, puis si on l'utilise, l'eau ou la solution aqueuse de silicate de métal alcalin et/ou de polycarboxylate en un laps de temps de 10 à 30 secondes, et on poursuit la granulation pendant encore 10 secondes à 10 minutes.

5. Procédé selon une des revendications 1 à 4, **caractérisé en ce que** l'association de substances actives est constituée de 70 à 95 % en poids de cire de paraffine et de 5 à 30 % en poids d'une bisamide dérivée de diamines en C₂₋₇ et d'acides carboxyliques saturés en C₁₂₋₂₂.

6. Procédé 5, **caractérisé en ce que** la cire de paraffine est solide à température ambiante et se présente sous forme liquide à une température de 40 °C à au moins 35 % en poids, en particulier à au moins 45 % en poids et à moins de 100 % en poids.

7. Procédé selon une des revendications 1 à 6, **caractérisé en ce que** le polycarboxylate polymère est sélectionné parmi les polycarboxylates qui peuvent être obtenus par oxydation de polysaccharides, ainsi que parmi les acides acryliques, méthacryliques et maléiques polymères et les polymères mixtes à base de ceux-ci, qui peuvent également renfermer, incorporées par polymérisation, des fractions minimes de substances polymérisables sans fonctionnalité d'acide carboxylique.

8. Procédé selon une des revendications 1 à 7, **caractérisé en ce que** l'on peut mettre en oeuvre comme polycarboxylates polymères, des terpolymères ou des quaterpolymères, qui renferment comme monomères, deux acides insaturés et/ou les sels de ceux-ci et comme troisième respectivement comme quatrième monomère, de l'alcool vinylique et/ou un dérivé de l'alcool vinylique et/ou un hydrate de carbone.

9. Procédé selon une des revendications 1 à 7, **caractérisé en ce que** l'éther de cellulose est sélectionné parmi la carboxyméthylcellulose sous forme de sel de métal alcalin, la méthylcellulose, l'éthylcellulose, l'hydroxyéthylcellulose et ce que l'on appelle les éthers mixtes de cellulose, tels la méthylhydroxyéthylcellulose et la méthylhydroxypropylcellulose et les mélanges de celles-ci.

10. Granulé de régulateur de mousse obtenable selon le procédé conforme à une des revendications 1 à 9, renfermant 60 à 90 % en poids en poids de sel porteur inorganique ou de mélange de sels porteurs, 0,5 à 5 % en poids d'un mélange de carboxyméthylcellulose sous forme de sel de métal alcalin, et d'éther de cellulose non ionique, en particulier dans un rapport pondéral de 80:20 à 40:60, 5 à 30 % en poids, en particulier 8 à 20 % en poids de l'association d'agents actifs antimousse, 0,5 à 10 % en poids, en particulier 1 à 5 % en poids de silicate de métal alcalin, 0,5 à 10 % en poids, en particulier 1 à 5 % en poids de polycarboxylate polymère et jusqu'à 15 % en poids, en particulier 2 à 10 % en poids d'eau.

11. Granulé de régulateur de mousse selon la revendication 10, **caractérisé en ce qu'**il possède une densité en vrac de 600 à 1400 grammes par litre, en particulier de 800 à 1200 grammes par litre.

12. Granulé de régulateur de mousse selon la revendication 10 ou 11, **caractérisé en ce que** plus de 80 % en poids, de préférence plus de 90 % en poids et en particulier, plus de 95 % en poids du granulé présentent une grosseur de grain comprise dans l'intervalle de 0,1 à 2,0 mm.

13. Granulé de régulateur de mousse selon une des revendications 10 à 12, **caractérisé en ce que** la grosseur moyenne de particule est comprise dans l'intervalle de 0,4 à 0,8 mm, des fractions aussi minimes que possible du granulé présentant une grosseur de particule en dehors de cet intervalle.

14. Utilisation des granulés de régulateur de mousse selon une des revendications 10 à 13 ou produits selon le procédé conforme à l'une des revendications 1 à 9, comme constituants de produits de lavage et de nettoyage.
